(19) Europäisches Patentamt
European Patent Office
Office européen des brevets

(11) **EP 1 804 213 B1**

(12) **FASCICULE DE BREVET EUROPEEN**

(45) Date de publication et mention
de la délivrance du brevet:
**02.04.2008 Bulletin 2008/14**

(51) Int Cl.:
**G06T 1/00** (2006.01)

(21) Numéro de dépôt: **06125563.4**

(22) Date de dépôt: **07.12.2006**

(54) **Procédé de tatouage d'une séquence vidéo**

Verfahren zum Wasserzeichnen einer Videosequenz

Method for watermarking a video sequence

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **29.12.2005 FR 0554132**

(43) Date de publication de la demande:
**04.07.2007 Bulletin 2007/27**

(73) Titulaires:
• **Societé Française du Radiotéléphone**
**75008 Paris (FR)**
• **Groupe Des Ecoles Des Telecommunications (GET)**
**Institut National Des Telecommunications (INT)**
**75634 Paris Cédex 13 (FR)**

(72) Inventeurs:
• **Mitrea, Mihai**
**91600 Savigny Sur Orge (FR)**

• **Preteux, Françoise**
**75013 Paris (FR)**
• **Nunez, Jean**
**78170 La Celle Saint Cloud (FR)**

(74) Mandataire: **Schmit, Christian Norbert Marie**
**SCHMIT-CHRETIEN-SCHIHIN**
**8, place du Ponceau**
**95000 Cergy (FR)**

(56) Documents cités:
**US-A1- 2003 133 590**

• **MITREA M ET AL: "VIDEO WATERMARKING FOR MOBILE PHONE APPLICATIONS" PROCEEDINGS OF THE SPIE, SPIE, BELLINGHAM, VA, US, vol. 5916, no. 591608, 8 septembre 2005 (2005-09-08), pages 1-11, XP007901005 ISSN: 0277-786X**

## Description

L'invention a pour objet un procédé de tatouage d'une séquence vidéo.

Le domaine de l'invention est celui de la protection des flux vidéo. Plus particulièrement le domaine de l'invention est celui connu sous le nom de « watermarking ».

Un but de l'invention est de permettre d'insérer dans une séquence vidéo une information invisible, c'est-à-dire sans dégradation notable à l'oeil, lors de la visualisation normale de la séquence vidéo. Ladite information pouvant cependant être lue par un procédé prédéterminé.

Un autre but de l'invention est de rendre l'information insérée inaltérable, que ce soit par la mise en oeuvre de procédés de transmission/transformation de la séquence vidéo ou que ce soit par la mise en oeuvre de procédés spécifiquement conçus pour altérer ce type d'information. Ici par type d'information il faut comprendre tatouage.

Dans l'état de la technique on connaît des technologies de tatouage de séquences vidéo. Une séquence vidéo est aussi communément appelée un film. Un film est ici assimilé à un fichier de données à un format connu codant les images correspondant au film. Les formats les plus connus sont les formats MPEG, AVX, et DIVX.

Le tatouage est aussi parfois appelé marquage ou filigranage. Tatouer un film consiste à insérer dans les données codant le film des informations invisibles lors de l'utilisation normal du film. Ces informations pouvant cependant être retrouvées par l'application d'un traitement de révélation prédéterminé sur le film. Ces informations sont aussi appelées la marque, le tatouage ou le filigrane.

Un tatouage peut ainsi être défini par au moins trois caractéristiques.

Une première caractéristique est la résistance aux fausses alarmes. Il ne faut, en effet, pas que le traitement de révélation révèle des informations si aucune information n'a été insérée.

Une deuxième caractéristique est la robustesse. Cette caractéristique quantifie la façon dont le tatouage résiste à différentes opérations réalisées sur le film. Ces opérations sont, au moins, le transcodage du film d'un format vers un autre format, la transmission du film via un canal de transmission bruité et des attaques destinées à supprimer le tatouage.

Une troisième caractéristique est la transparence. Cette caractéristique mesure la façon dont l'insertion du tatouage altère la perception du film visualisé par un utilisateur. Un tatouage parfait est totalement transparent, c'est-à-dire totalement imperceptible à l'utilisateur visualisant le film tatoué.

Une quatrième caractéristique d'un tatouage est la capacité de réaliser une révélation du tatouage en aveugle, c'est-à-dire sans avoir besoin du fichier original non tatoué.

Les procédés de l'état de la technique sont de deux types : l'étalement de spectre et le marquage par information de bord. Le document US 2003/0133590 A1 décrit un tel procédé.

Dans les procédés par étalement de spectre le tatouage est réparti sur plusieurs images dans le film. Cela permet de bien résister à une transmission bruitée car le bruit n'affecte pas toutes les images de la même manière. Avec ces procédés, à titre d'exemple, on est robuste pour une marque de 256 bits dans une séquence vidéo de 40 secondes à un débit de 64 kbits/seconde.

On utilise cet exemple de film, 40 secondes à un débit de 64 kbits/seconde, car cela correspond à des «clips» couramment diffusés sur des téléphones mobiles.

Dans les procédés de marquage par information de bord, on se base sur la connaissance du codage utilisé pour placer la marque de façon intelligente. Ces procédés ne sont pas du tout robustes, mais permettent d'insérer une grande quantité d'informations.

D'une manière générale, ces procédés ne sont que très peu résistants aux attaques dont la finalité est la suppression du tatouage. La plus connue de ces attaques est l'attaque « StirMark » dont le principe est de d'introduire un léger flou dans toutes les images du film. Cela a pour effet de détruire tous les tatouages de l'état de la technique.

Dans l'invention on résout ce problème, tout en ayant une robustesse et une transparence optimale, on combinant les deux approches de l'état de la technique. Ainsi dans l'invention on sélectionne des coefficients significatifs dans une séquence d'images transformées et on insère la marque dans cette séquence. La vidéo est ensuite soumise à des tests de robustesse dans une itération qui fait évoluer le codage de la marque en fonction du résultat des tests. Au bout d'un certain nombre d'itérations le tatouage est considéré comme satisfaisant et le film est donc considéré comme tatoué. De manière à améliorer encore le procédé, la marque est produite à partir d'une clé secrète, ce qui permet de garder la marque secrète tout en autorisant une révélation en aveugle.

L'invention a donc pour objet un procédé de tatouage d'une séquence vidéo qui comporte au moins les étapes suivantes, mises en oeuvre pas un dispositif de tatouage de la séquence vidéo :

- transformation d'une séquence d'images en une séquence d'images transformées,
- ordonnancement, pour les coefficients de chaque image transformée, ou d'une zone de chaque image transformée, selon un ordre prédéterminé,
- sélection pour chaque image de la séquence transformée des R premiers coefficients parmi les coefficients ordonnés,
- assemblage des coefficients sélectionnés de chaque image en un vecteur de travail par concaténation des coefficients ordonnés,

- traitement du vecteur de travail,
- insertion du vecteur de travail traité dans la séquence d'images,
- test de la résistance de l'insertion par comparaison à un message de référence prédéterminé et après soumission de la séquence d'images à des attaques et/ou à du bruit,
- répétition du traitement jusqu'à ce qu'une condition d'arrêt liée au test de résistance soit atteinte,

le procédé comportant pour cela les étapes suivantes :

- extraction d'un vecteur C0 par la mise en oeuvre des étapes suivantes :

  - transformation d'une séquence de L images en une séquence de L transformées,
  - détermination d'une zone d'intérêt dans les L transformées,
  - pour chaque zone d'intérêt de chaque transformée on ordonne les coefficients de la zone,
  - pour chaque zone d'intérêt de chaque transformée on extrait les R premiers coefficients de l'ordonnancement,
  - on assemble les L * R coefficients en un vecteur C0,

- on choisit un message M de dimension Lm,
- on chiffre le message M avec une clé K de manière à obtenir un vecteur G de longueur L * R,
- on initialise un vecteur Cw par le vecteur C0,
- on applique un traitement de déchiffrage au vecteur Cw, puis on applique au résultat obtenu un traitement de chiffrage, pour obtenir un vecteur B de longueur L * R, ces opérations étant de type codage de canal,
- on initialise deux compteurs i et j à 0,
- tant que i est inférieur à Ni et j inférieur à Nj,

  - si G est identique à B, alors on incrémente i d'une unité,
  - si G est différent de B, alors :

    - on calcule un coefficient de robustesse D,
    - on initialise i à 0,
    - on incrémente j d'une unité,
    - si D est inférieur à Dt alors

      - on modifie Cw,
      - on insère le Cw modifié dans la séquence vidéo à tatouer, par un procédé inverse de celui utilisé pour l'extraction du vecteur C0,
      - on initialise j à 0,

  - on effectue un test de résistance en brouillant la séquence vidéo par une transmission bruitée et par une attaque contre le tatouage,

- on extrait un vecteur Cwa à partir de la séquence vidéo brouillée, par le même procédé utilisé pour l'extraction du vecteur C0,
- on produit le vecteur B à partir du vecteur Cwa.

Avantageusement l'invention est aussi caractérisée en ce que la transformée utilisée est une transformée parmi la liste formée d'au moins : transformée en ondelettes, transformée en cosinus discret, transformée de Fourier, transformée de Mellin-Fourier, ou par une représentation algébrique par exemple une décomposition en valeurs singulières.

Avantageusement l'invention est aussi caractérisée en ce que l'ordonnancement est croissant, décroissant ou aléatoire.

Avantageusement l'invention est aussi caractérisée en ce que le traitement de chiffrage est réalisé par une procédure de type codage de canal, avec un codeur en treillis, la clé K étant la matrice de ce codeur.

Avantageusement l'invention est aussi caractérisée en ce que le traitement de déchiffrage est réalisé par une procédure de type décodage de canal, avec un décodeur de Viterbi utilisant la clé K comme matrice de décodage.

Avantageusement l'invention est aussi caractérisée en ce que R est compris dans l'intervalle [300, 420].

Avantageusement l'invention est aussi caractérisée en ce que L est compris dans l'intervalle [800, 1200] pour une séquence vidéo comportant 25 images par secondes à un débit de 64 kb/s.

Avantageusement l'invention est aussi caractérisée en ce que le coefficient de robustesse D est

$$D = \frac{G - B}{|G - B|} \circ Cw,$$

où |.| représente la norme euclidienne L*R dimensionnelle et $\circ$ est l'opérateur de calcul du coefficient de corrélation non normé.

Avantageusement l'invention est aussi caractérisée en ce que le brouillage de la séquence vidéo est réalisé avec un bruit de type bruit blanc.

Avantageusement l'invention est aussi caractérisée en ce que le brouillage de la séquence vidéo est réalisé avec une attaque StirMark, appliquée à chaque image de la séquence.

Avantageusement l'invention est aussi caractérisée en ce que la modification de Cw est réalisée conformément à la formule :

$$Cw \leftarrow Cw + \frac{G - B}{|G - B|} \cdot (D_T - D),$$

où $(\cdot)$ représente le produit entre un vecteur et un scalaire.

Avantageusement l'invention est aussi caractérisée en ce que Ni est dans l'intervalle [175, 225].

Avantageusement l'invention est aussi caractérisée en ce que Nj est dans l'intervalle [175, 225].

Avantageusement l'invention est aussi caractérisée en ce que S * Lm vaut L * R, où S représente le nombre de colonnes dans la matrice du codeur en treillis.

L'invention sera mieux comprise à la lecture de la description qui suit et à l'examen des figures qui l'accompagnent. Celles-ci sont présentées à titre indicatif et nullement limitatif de l'invention. Les figures montrent :

- Figure 1 : une illustration d'étapes du procédé selon l'invention.
- Figure 2 : une illustration d'une étape d'initialisation du procédé selon l'invention.
- Figure 3 : une illustration d'une zone d'intérêt d'une image transformée.

Dans la description les actions sont effectuées par un dispositif mettant en oeuvre le procédé selon l'invention. Un tel dispositif est un dispositif doté de capacités de traitement standard à savoir, un microprocesseur, des mémoires de programmes, travail et stockage, et des moyens d'entrée/sortie. Le procédé selon l'invention est alors enregistré sous forme de codes instructions dans la mémoire de programme du dispositif.

Les dimensions et grandeurs illustrant la mise en oeuvre de l'invention correspondent à un film de 40 secondes, à 25 images par seconde transmis dans un canal de 64 Kbits/s. Cet exemple correspond au domaine de la transmission de film dans le domaine de la téléphonie mobile. L'invention, bien entendu, reste valable pour des films plus longs, en divisant le film en sous-films de 40 secondes. Cela correspond à un film de L images, L valant approximativement 1000.

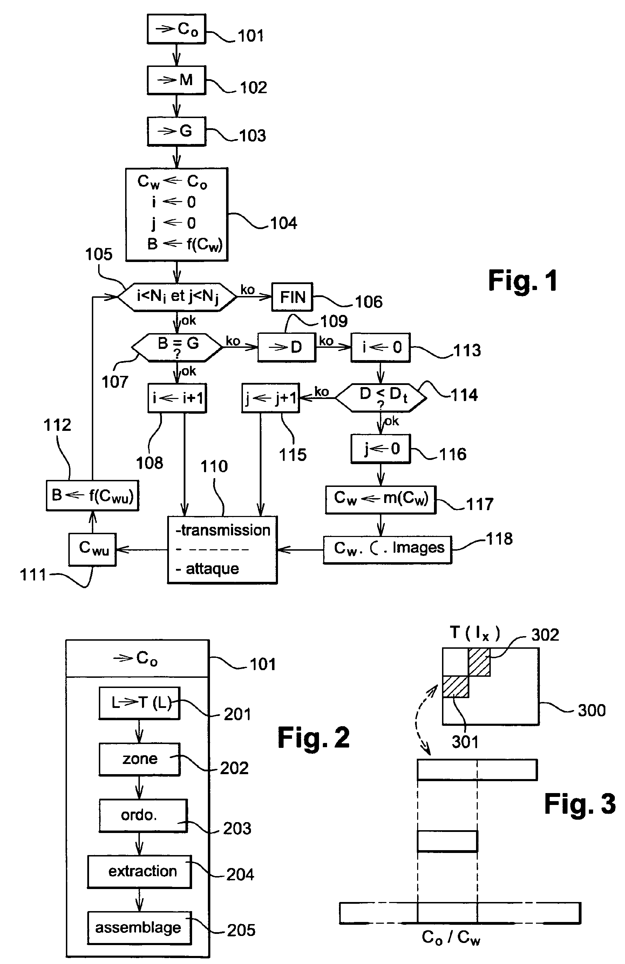

La figure 1 montre une étape 101 préliminaire de production d'un vecteur C0 à partir d'un film.

La figure 2 montre que l'étape 101 comporte plusieurs sous-étapes.

Ainsi l'étape 101 comporte une étape 201 de transformation d'un film de L images en un film de L images transformées. Des transformations sont déjà mises en oeuvre par les procédés de compression. Dans la pratique l'information produite à cette étape 201 est donc déjà disponible puisque les films existent dans des formats compressés ici appelés formats transformés. La présence de cette étape ne nuit donc pas à la performance du procédé selon l'invention.

Les transformations les plus couramment utilisées dans la compression de films sont les transformations en cosinus discret (DCT) et les transformations en ondelettes (DWT). Dans la pratique d'autres transformations sont utilisables comme la transformée de Fourier, la transformée de Mellin-Fourier ou la représentation algébrique, par exemple une décomposition en valeurs singulières. A la fin de l'étape 201 on dispose donc de L images transformées.

Une image est ici une matrice, carrée ou non, de coefficients. Pour la description on considère que ces coefficients sont codés sur 8 bits. Dans la pratique les coefficients pourraient être codés sur plus ou moins de bits.

Une image transformée est une matrice, carrée ou non, de coefficients. On considère ici que les coefficients de l'image transformée ont la même dynamique, 8 bits, que les coefficients de l'image. Ceci n'est pas nécessairement le cas.

De l'étape 201 on passe à une étape 202 de sélection d'une zone d'intérêt dans les images transformées. Dans la pratique cette zone peut couvrir toute la surface de l'image, ou une zone aléatoire prédéterminée. Dans une mise en oeuvre plus intéressante certaines considérations président à la sélection de cette zone. On choisit de préférence une zone correspondant à une information importante dont l'altération conduirait à une dégradation significative de la qualité du film que l'on souhaite marquer. Par exemple dans le cas de la transformation DWT, ou la transformation DCT on sélectionne deux sous-bandes de basses fréquences.

La figure 3 illustre ces sous-bandes 301 et 302. Elles sont situées dans le coin supérieur gauche d'une image 300 transformée. Cette zone d'intérêt est alors constituée de deux carrés symétriques par rapport à une diagonale de l'image.

De l'étape 202 on passe à une étape 203 d'ordonnancement, c'est-à-dire de tri, des coefficients de la zone d'intérêt. Dans la pratique on choisit un tri croissant ou décroissant. Mais un autre tri de type aléatoire ou un tri séquentiel correspondant à un ordre de lecture des coefficients dans l'image transformée permettrait aussi la mise en oeuvre efficace de l'invention.

De l'étape 203 on passe à une étape 204 d'extraction des coefficients de l'image transformée. Ici on extrait les R premiers coefficients de l'ordonnancement réalisé à l'étape 203. Dans un exemple préféré R vaut 360.

On réalise les étapes 202 à 204 pour toutes les images transformées puis, on passe à une étape 205 d'assemblage qui consiste à concaténer tous les résultats dans l'ordre de leur production, ou un autre prédéterminé, pour obtenir un vecteur C0 de L x R coefficients.

La figure 1 montre que l'on passe de l'étape 101 à une étape 102 de production d'un message M. Le message M est tout simplement l'information que l'on souhaite tatouer dans la séquence vidéo. Dans la pratique on choisit de coder 1 bit de message par image. Dans notre exemple cela revient à disposer de 1000 / 8 = 125 octets pour tatouer une séquence vidéo de 40 secondes. Donc on peut insérer, avec de très bonnes qualités, un message de Lm = 125 octets dans une séquence vidéo de 40 secondes. Le contenu de M est totalement arbitraire et fonction de l'information qu'une personne mettant en oeuvre le procédé selon l'invention souhaite tatouer dans la séquence vidéo traitée. Si Lm est plus petit alors le tatouage sera de meilleure qualité (on rappelle transparence et robustesse), si Lm est plus grand alors le tatouage sera de moins bonne qualité.

De l'étape 102 on passe à une étape 103 de production d'un vecteur G. le vecteur G a une dimension de L * R en octets. Le vecteur G est le résultat d'un chiffrage du message M. Ce chiffrage est réalisé par une procédure de type codage de canal avec un codeur de canal en treillis modifié. Il est modifié en ce qu'on utilise comme matrice de ce codeur une matrice K secrète servant de clé de chiffrement. Ici la matrice K de codage en treillis a S colonnes, telle que S x Lm vaut L x R. Cela garantit que le vecteur G sera de dimension L x R. Les coefficients de la matrice K sont choisis de façon aléatoire.

De l'étape 103 on passe à une étape 104 d'initialisation de variables du procédé. Dans la pratique on initialise un vecteur Cw à la valeur de C0, on initialise deux compteurs i et j à 0 et on initialise un vecteur B à f (Cw). Les vecteurs G, B, et Cw sont de même dimension.

La fonction f est réalisée comme suit. On considère f(V). On applique à V un traitement de décodage de canal de type décodage de Viterbi. La matrice utilisée pour le décodage de Viterbi est la matrice K. Ce décodage produit un vecteur Vi intermédiaire de dimension Lm. On applique au vecteur Vi un codage en treillis comme précédemment décrit, c'est-à-dire en utilisant la matrice K comme matrice de codage. Le résultat de ce codage est la sortie de la fonction f.

De l'étape 104 on passe à une étape 105 d'évaluation d'une condition de sortie d'une boucle de traitement. Cette condition est que le traitement continue tant que i < Ni et j < Nj. Dans la pratique i et j contrôlent la résistance d'un tatouage aux attaques à la « vie » d'une séquence vidéo. Ces attaques sont, on le rappelle, au moins les manipulations, les transmissions et les tentatives de piratage. Si i est supérieur ou égal à Ni, ou si j est supérieur ou égale à Nj, alors le traitement s'arrête et la dernière séquence vidéo utilisée pour les tests de résistance est la séquence vidéo tatouée. On passe donc à une étape 106 de fin, c'est-à-dire d'arrêt du traitement. Cette étape 106 est, par exemple, une étape d'archivage ou de transmission effective de la séquence vidéo tatouée.

Dans une réalisation de l'invention Ni et Nj valent 200. Dans la pratique ils sont compris dans l'intervalle [175 - 225]. Plus ils sont élevés plus la résistance aux attaques sera garantie. Cependant il faut aussi prendre en considération le temps de traitement. A partir de 175 les résultats sont efficacement exploitables. La valeur 200 est un compromis optimal en date de rédaction de ce document relativement aux puissances de calcul disponibles sur les dispositifs susceptibles de mettre en oeuvre le procédé selon l'invention.

Si le test 105 est valide, c'est-à-dire si i < Ni et j < Nj, alors on passe à une étape 107 de comparaison des vecteurs B et G. Dans une mise en oeuvre de l'invention cette comparaison consiste à comparer deux à deux les coefficients des vecteurs B et G,. les coefficients de même rang devant être égaux pour que les vecteurs soient déclarés égaux, c'est-à-dire si |B- G| = 0. Dans cette description la fonction || est la norme euclidienne. Dans une variante de l'invention on introduit une tolérance en considérant que les vecteurs B et G sont égaux si |B - G| est inférieur à un seuil prédéterminé.

Si B = G, alors on passe à une étape 108, sinon on passe à une étape 109.

Dans l'étape 108, on incrémente le compteur i d'une unité, puis on passe à une étape 110 d'altération de la séquence vidéo modifiée. On note ici qu'à la première itération la séquence vidéo n'est pas encore modifiée puisque Cw = C0. Mais, lors d'itérations suivantes la séquence vidéo aura été modifiée. On parle donc de manière générique de séquence vidéo modifiée.

Dans l'étape 110, on soumet la séquence vidéo modifiée à un canal de transmission virtuel, c'est-à-dire que l'on simule une transmission de la séquence vidéo modifiée en la soumettant à un bruit de transmission, par exemple à un bruit blanc et à un bruit correspondant à une attaque.

Dans une mise en oeuvre de l'invention, le bruit de transmission est indexé par i et j. On effectue ainsi des tests en utilisant plusieurs versions de bruits ce qui garantit une bonne exploration des modifications que la séquence vidéo peut subir au cours d'une transmission.

Dans une mise en oeuvre de l'invention, l'attaque réalisée à l'étape 110 est de type StirMark. Il s'agit en effet de l'attaque la plus violente que puisse subir une séquence vidéo à l'heure actuelle.

Dans une variante de l'invention, l'étape 110 comporte d'autres types d'attaques, éventuellement non encore existante, de manière à garantir la résistance du tatouage à tous les types d'attaques.

Dans une autre variante de l'invention, la séquence vidéo utilisée en entrée de l'étape 110 à l'itération k est celle produite par l'étape 110 à l'itération k - 1 k représentant ici i ou j selon le chemin d'arrivée à l'étape 110. Si i et j valent 0, alors la séquence vidéo en entrée de l'étape 110 est la séquence vidéo modifiée.

De l'étape 110 on passe à une étape 111 d'extraction d'un vecteur Cwa de la séquence vidéo produite à l'étape 110. Cette extraction est réalisée comme pour la production du vecteur C0 à l'étape 101, mais à partir de la séquence vidéo produite à l'étape 110.

De l'étape 111 on passe à une étape 112 de recalcul du vecteur B à partir du vecteur Cwa. Cette production est réalisée par B = f(Cwa), f étant la fonction définie lors de la description de l'étape 104.

De l'étape 112 on repasse à l'étape 105.

Dans l'étape 109, on calcule un coefficient de robustesse D. Pour cela dans une mise en oeuvre de l'invention on utilise la formule suivante :

$$D = \frac{G - B}{|G - B|} \circ Cw$$

où est l'opérateur de calcul du coefficient de corrélation non normé.

De l'étape 109 on passe à une étape 113 de remise à 0 du compteur i.

L'homme de l'art constatera sans peine que l'ordre relatif des étapes 109 est 113 n'a pas d'importance dans la mise en oeuvre de l'invention. D'une manière générale il en va de même pour les étapes d'initialisation non dépendantes les unes des autres.

De l'étape 113 on passe à une étape 114 de comparaison de D à une référence Dt prédéterminée. Si D est supérieur ou égal à Dt alors on passe à une étape 115. Dans ce cas, cela signifie que la robustesse de la séquence vidéo modifiée est jugée satisfaisante. Dans la pratique Dt vaut 0.4, mais il peut être sélectionné dans l'intervalle [0.2, 1] en conservant au procédé un comportement acceptable du point de vue de la qualité du tatouage produit.

Dans l'étape 115 on incrémente le compteur j d'une unité puis, on passe à l'étape 110.

Si D est inférieur à Dt alors on passe de l'étape 114 à une étape 116.

Dans l'étape 116 on met à 0 le compteur j puis on passe à une étape 117 de modification du vecteur Cw.

Dans une mise en oeuvre de l'invention, dans l'étape 117 le vecteur Cw est modifié par la formule suivante :

$$Cw \leftarrow Cw + \frac{G - B}{|G - B|} \cdot (D_t - D)$$

De l'étape 117 on passe à une étape 118 d'insertion de Cw dans la séquence d'image pour produire une séquence d'image modifiée.

L'insertion de Cw dans la séquence d'image se fait par un procédé inverse de celui décrit pour la production du vecteur C0. En particulier, on considère que le vecteur Cw est le résultat d'une extraction d'une séquence d'images et qu'il est donc composé de L sous-ensembles de R coefficients. Un sous-ensemble donné dans Cw correspond alors à une zone d'intérêt d'une image de la séquence d'images. Chaque coefficient de sous-ensemble correspond alors à un coefficient de l'image. Pour insérer Cw dans la séquence d'images on remplace donc les coefficients des images de la séquence d'images par leurs correspondants dans Cw.

De l'étape 118 on repasse à l'étape 110.

Lorsque l'on arrive à l'étape 106 la séquence vidéo tatouée est la dernière séquence vidéo modifiée produite à l'étape 118.

Le lecteur aura remarqué que le mode de réalisation décrit n'est pas exactement celui revendiqué. En effet le mode de réalisation revendiqué correspond à un enchaînement des étapes comme suit :

De l'étape 113 on passe à l'étape 115, de l'étape 115 on passe à l'étape 114. Si le test de l'étape 114 est négatif, alors on passe à l'étape 110, s'il est positif, on passe à l'étape 116.

Cette différence qui est volontaire ne rendra la description confuse mais permettra plutôt d'illustrer une fois encore ce qui a été dit pour les étapes 109 et 113. A savoir que l'on peut échanger l'ordre de certaines étapes sans modifier pour autant le procédé selon l'invention. Cela est en particulier vrai pour les étapes d'initialisation.

Une fois la séquence vidéo tatouée, elle peut être diffusée. La révélation du tatouage requiert la connaissance du procédé de tatouage et de la matrice K. Pour révéler le tatouage il suffit de procéder à une extraction du vecteur C0 sur la séquence vidéo et d'appliquer au vecteur C0 un décodage de canal de Viterbi en utilisant comme matrice de codage la matrice K. La révélation se fait donc bien en aveugle.

Avec l'invention il est donc possible de dissimuler au moins 125 octets d'informations dans une séquence vidéo de 40s à 64kbits/s. Ces informations peuvent être utilisées pour identifier un propriétaire de la séquence vidéo, un destinataire de la séquence vidéo, ou toute autre forme d'information comme des codes instructions qui seront interprétés par le dispositif jouant la séquence vidéo pour apporter de l'interactivité à la séquence vidéo. L'invention permet donc, d'une manière générale, de créer un canal de diffusion caché dans une séquence vidéo.

**Revendications**

1. Procédé de tatouage d'une séquence vidéo qui comporte au moins les étapes suivantes, mises en oeuvre par un dispositif de tatouage de la séquence vidéo :

  - transformation (201) d'une séquence d'images en une séquence d'images transformées,
  - ordonnancement (203), pour les coefficients de chaque image transformée, ou d'une zone (202) de chaque image transformée, selon un ordre prédéterminé,
  - sélection (204) pour chaque image de la séquence transformée des *R* premiers coefficients parmi les coefficients ordonnés,
  - assemblage (205) des coefficients sélectionnés de chaque image en un vecteur de travail par concaténation des coefficients ordonnés,
  - traitement (105 - 117) du vecteur de travail,
  - insertion (118) du vecteur de travail traité dans la séquence d'images,
  - test (110) de la résistance de l'insertion par comparaison à un message de référence prédéterminé et après soumission de la séquence d'images à des attaques et/ou à du bruit,
  - répétition (105) du traitement jusqu'à ce qu'une condition d'arrêt liée au test de résistance soit atteinte,

le procédé comportant pour cela les étapes suivantes :

    a. extraction (101) d'un vecteur C0 par la mise en oeuvre des étapes suivantes :

        a.1. transformation (201) d'une séquence de L images en une séquence de L transformées,
        a.2. détermination (202) d'une zone d'intérêt dans les L transformées,
        a.3. pour chaque zone d'intérêt de chaque transformée on ordonne (203) les coefficients de la zone,
        a.4. pour chaque zone d'intérêt de chaque transformée on extrait (204) les R premiers coefficients de l'ordonnancement,
        a.5. on assemble (205) les L * R coefficients en un vecteur C0,

    b. on choisit (102) un message M de dimension Lm,
    c. on chiffre (103) le message M avec une clé K de manière à obtenir un vecteur G de longueur L * R,
    d. on initialise (104) un vecteur Cw par le vecteur C0,
    e. on applique (104) un traitement de déchiffrage au vecteur Cw, puis on applique au résultat obtenu un traitement de chiffrage, pour obtenir un vecteur B de longueur L * R, ces opérations étant de type codage de canal,
    f. on initialise (104) deux compteurs i et j à 0,
    g. tant que i est inférieur à Ni et j inférieur à Nj (105)

        g..1. si G est identique à B (107), alors on incrémente (108) i d'une unité,
        g.2. si G est différent de B (107), alors :

            g.2.1. on calcule (109) un coefficient de robustesse D,
            g.2.2. on initialise (113) i à 0,
            g.2.3. on incrémente (115) j d'une unité,
            g.2.4. si D est inférieur à Dt (114) alors

                g.2.4.1. on modifie (117) Cw,
                g.2.4.2. on insère (118) le Cw modifié dans la séquence vidéo à tatouer, par un procédé inverse de celui utilisé pour l'extraction du vecteur C0,
                g.2.4.3. on initialise (116) j à 0,

        g.3. on effectue (110) un test de résistance en brouillant la séquence vidéo par une transmission bruitée et par une attaque contre le tatouage,

        g.4. on extrait (111) un vecteur Cwa à partir de la séquence vidéo brouillée, par le même procédé utilisé pour l'extraction du vecteur C0,
        g.5. on produit (112) le vecteur B à partir du vecteur Cwa.

avec Ni et Nj des nombres entiers positifs utilisés pour l'évaluation d'une condition de sortie de la boucle et, Dt une référence prédéterminée.

**2.** Procédé selon la revendication 1 **caractérise en ce que** la transformée utilisée est une transformée parmi la liste formée d'au moins : transformée en ondelettes, transformée en cosinus discret, transformée de Fourier, transformée de Mellin-Fourier, ou par une représentation algébrique par exemple une décomposition en valeurs singulières.

**3.** Procédé selon l'une des revendications 1 ou 2, **caractérisé en ce que** l'ordonnancement est croissant, décroissant ou aléatoire.

**4.** Procédé selon l'une des revendications 1 à 3, **caractérisé en ce que** le traitement de chiffrage est réalisé par une procédure de type codage de canal, avec un codeur en treillis, la clé K étant la matrice de ce codeur.

**5.** Procédé selon l'une des revendications 1 à 4, **caractérisé en ce que** le traitement de déchiffrage est réalisé par une procédure de type décodage de canal, avec un décodeur de Viterbi utilisant la clé K comme matrice de décodage.

**6.** Procédé selon l'une des revendications 1 à 5, **caractérisé en ce que** R est compris dans l'intervalle [300, 420].

**7.** Procédé selon l'une des revendications 1 à 6, **caractérisé en ce que** L est compris dans l'intervalle [800, 1200] pour une séquence vidéo comportant 25 images par secondes à un débit de 64 kb/s.

**8.** Procédé selon l'une des revendications 1 à 7, **caractérisé en ce que** le coefficient de robustesse D

est $D = \dfrac{G - B}{\left|G - B\right|} \circ Cw$ , où |.| représente la norme euclidienne L*R dimensionnelle et ° est l'opérateur de calcul du coefficient de corrélation non normé.

**9.** Procédé selon l'une des revendications 1 à 8, **caractérisé en ce que** le brouillage de la séquence vidéo est réalisé avec un bruit de type bruit blanc.

**10.** Procédé selon l'une des revendications 1 à 9, **ca-**

**ractérisé en ce que** le brouillage de la séquence vidéo est réalisé avec une attaque StirMark, appliquée à chaque image de la séquence.

11. Procédé selon l'une des revendications 1 à 10, **caractérisé en ce que** la modification de Cw est réalisée conformément à la formule :

$$Cw \leftarrow Cw + \frac{G-B}{|G-B|} \cdot (D_T - D),$$ où $(\cdot)$ représente le produit entre un vecteur et un scalaire.

12. Procédé selon l'une des revendications 1 à 11, **caractérisé en ce que** Ni est dans l'intervalle [175, 225].

13. Procédé selon l'une des revendications 1 à 12, **caractérisé en ce que** Nj est dans l'intervalle [175, 225].

14. Procédé selon l'une des revendications 1 à 13, **caractérisé en ce que** S * Lm vaut L * R, où S représente le nombre de colonnes dans la matrice du codeur en treillis.

15. Utilisation du procédé selon l'une des revendications 1 à 14 pour tatouer une séquence vidéo.

**Claims**

1. Method for watermarking a video sequence comprising at least the following steps, implemented by a video sequence watermarking device :

   - transformation (201) of a sequence of images into a sequence of transformed images,
   - sequencing (203), for the coefficients of each transformed image, or of a zone (202) of each transformed image, according to a pre-determined order,
   - selecting (204), for each image of the transformed sequence of the first R coefficients among the sequenced coefficients,
   - assembly (205) of the selected coefficients of each image into an operation vector by concatenation of the sequenced coefficients,
   - processing (105 - 117) of the operation vector,
   - insertion (118) of the processed operation vector into the sequence of images,
   - testing the insertion resistance (110) by comparing with a predetermined reference message and after submitting the sequence of images to attacks and/or to noise,
   - repetition (105) of the process until a stopped status linked to the resistance test is attained, the method thus comprising the following steps :

   a. extraction (101) of a C0 vector by implementing the following steps :

      a.1. transformation (201) of a sequence of L images into a sequence of transformed Ls,
      a.2. determination (202) of a zone of interest within the transformed Ls,
      a.3. for each zone of interest of each one transformed, the coefficients of the zone are sequenced (203),
      a.4. for each zone of interest of each one transformed, the first R coefficients of the sequencing are extracted (204),
      a.5. the L*R coefficients are assembled (205) into a C0 vector,

   b. a message M of dimension Lm is chosen (102),
   c. the message M is encoded (103) with a key K in order to obtain a vector G of L*R length,
   d. a Cw vector is initialised (104) by the C0 vector,
   e. a decoding process is applied (104) to the Cw vector, then an encoding process is applied to the result obtained, in order to obtain a B vector of L*R length, such operations being of the channel coding type,
   f. two counters i and j are initialised (104) at 0,
   g. as long as i is lower than Ni and j lower than Nj (105)

      g.1. if G is identical to B (107), then i is incremented (108) by one unit,
      g.2. if G is different from B (107), then :

         g.2.1. a robustness coefficient D is calculated (109),
         g.2.2. i is initialised (113) at 0,
         g.2.3. j is incremented (115) by one unit,
         g.2.4. if D is lower than Dt (114), then

            g.2.4.1. Cw is modified (117),
            g.2.4.2. the modified Cw is inserted (118) into the video sequence to be watermarked, using an inverse method to that used for extracting the C0 vector,
            g.2.4.3. j is initialised (116) at 0,

         g.3. a resistance test is performed (110) by scrambling the video sequence through a sound-effect transmission and through an attack against the watermarking,

g.4. a Cwa vector is extracted (111) using the scrambled video sequence, via the same method as that for the C0 vector extraction,

g.5. the B vector is produced (112) using the Cwa vector with Ni and Nj of the positive whole numbers used for evaluating an output status of the loop and with a predetermined reference Dt.

2. A method according to claim 1, **characterised in that** the one transformed is the one transformed from among the list comprised of at least: transformed into wavelets, transformed into discrete cosines, Fourier transformed, Mellin-Fourier transformed, or transformed by an algebraic representation, for example, a decomposition into singular values.

3. A method according to one of the claims 1 or 2, **characterised in that** the sequencing increases, decreases or is at random.

4. A method according to one of the claims 1 to 3, **characterised in that** the encoding process is performed by a channel encoding type procedure, incorporating a trellis encoder, the key K being the matrix of this encoder.

5. A method according to one of the claims 1 to 4, **characterised in that** the decoding process is performed by a channel decoding type procedure, incorporating a Viterbi decoder using the key K as decoding matrix.

6. A method according to one of the claims 1 to 5, **characterised in that** R is comprised within the interval [300, 420].

7. A method according to one of the claims 1 to 6, **characterised in that** L is comprised within the interval [800, 1200] for a video sequence comprising 25 images per second at a rate of 64 kb/sec.

8. A method according to one of the claims 1 to 7, **characterised in that** the coefficient of robustness D is

$$D = \frac{G - B}{|G - B|} \circ Cw$$

where |.| represents the dimensional L*R Euclidean standard and ° is the calculation factor of the non-standardised correlation coefficient.

9. A method according to one of the claims 1 to 8, **characterised in that** the scrambling of the video sequence is performed using noise of the "white noise" type.

10. A method according to one of the claims 1 to 9, **characterised in that** the scrambling of the video sequence is performed using a StirMark attack applied to each image of the sequence.

11. A method according to one of the claims 1 to 10, **characterised in that** the Cw modification is performed in accordance with the formula :

$$Cw \leftarrow Cw + \frac{G - B}{|G - B|} \cdot (D_T - D),$$

where $(\cdot)$ shows the product between a vector and a scalar.

12. A method according to one of the claims 1 to 11, **characterised in that** Ni is comprised within the interval [175, 225].

13. A method according to one of the claims 1 to 12, **characterised in that** Nj is comprised within the interval [175, 225].

14. A method according to one of the claims 1 to 13, **characterised in that** S * Lm is equal to L*R where S represents the number of columns inside the matrix of the trellis encoder.

15. The use of the method according to one of the claims 1 to 14 in order to watermark a video sequence.

**Patentansprüche**

1. Verfahren zum Markieren einer Videosequenz, das zumindest die folgenden Schritte enthält, die von einer Vorrichtung zum Markieren der Videosequenz angewandt werden :

- Transformation (201) einer Bilderreihe in eine Reihe an transformierten Bildern,
- Reihung (203) für die Koeffizienten jedes transformierten Bildes, oder einer Zone (202) jedes transformierten Bildes, gemäß einer vorbestimmten Reihenfolge,
- Auswahl (204) für jedes Bild der transformierten Reihe der ersten R Koeffizienten unter den geordneten Koeffizienten,
- Zusammensetzen (205) der ausgewählten Koeffizienten jedes Bildes in einen Arbeitsvektor durch die Verkettung der geordneten Koeffizienten,
- Bearbeitung (105 - 117) des Arbeitsvektors,
- Einfügen (118) des bearbeiteten Arbeitsvektors in die Bilderreihe,
- Test (110) der Robustheit der Einfügung durch den Vergleich mit einer vorbestimmten Bezugsnachricht, und nachdem die Bilderreihe Attacken und/ oder einem Rauschangriff ausgesetzt wurde,

- Wiederholung (105) der Bearbeitung, solange, bis eine Stoppbedingung in Verbindung mit dem Robustheitstest erreicht ist, das Verfahren enthält dabei die folgenden Schritte:

    a. Extrahieren (101) eines Vektors C0 durch die Umsetzung der folgenden Schritte:

        a.1. Transformation (201) einer Reihe von L Bildern in eine Reihe von L Transformationen,

        a.2. Bestimmung (202) eines Interessensbereiches innerhalb der L Transformationen,

        a.3. man ordnet (203) die Koeffizienten des jeweiligen Bereiches für jeden Interessensbereich aller Transformationen,

        a.4. für jeden Interessensbereich aller Transformationen extrahiert (204) man die ersten R Koeffizienten der Reihung,

        a.5. man stellt (205) die L * R Koeffizienten zu einem Vektor C0 zusammen,

    b. man wählt (102) eine Nachricht M der Größe Lm,

    c. man chiffriert (103) die Nachricht M mit einem Schlüssel K, sodass man einen Vektor G der Länge L * R erhält,

    d. man initialisiert (104) einen Vektor Cw durch den Vektor C0,

    e. man unterzieht (104) den Vektor Cw einer Dechiffrierbehandlung, und unterzieht dann das Ergebnis einer Chiffrierbehandlung, um einen Vektor B der Länge L * R zu erhalten, wobei diese Operationen Kanalcodierungen sind,

    f. man initialisiert (104) zwei Zähler i und j auf 0,

    g. solange i kleiner ist, als Ni und j kleiner ist, als Nj (105)

        g.1. wenn G gleich B (107) ist, inkrementiert (108) man i um eine Einheit,

        g.2. wenn G ungleich B (107) ist, dann :

            g.2.1. berechnet (109) man einen Robustheitskoeffizienten D,

            g.2.2. initialisiert (113) man i auf 0,

            g.2.3. inkrementiert (115) man j um eine Einheit,

            g.2.4. wenn D kleiner ist als Dt (114), dann:

                g.2.4.1. verändert (117) man Cw

                g.2.4.2. fügt (118) man den veränderten Cw in die zu markierende Videosequenz durch ein umgekehrtes Verfahren zu jenem ein, das für die Extrahierung des Vektors C0 verwendet wird,

                g.2.4.3. initialisiert (116) man j auf 0,

        g.3. man führt (110) einen Robustheitstest durch Stören einer Videosequenz anhand einer Rauschübertragung und einer Attacke auf die Markierung durch,

        g.4. man extrahiert (111) einen Vektor $C_{wa}$ aus der gestörten Videosequenz, unter Verwendung desselben Verfahrens, das für die Extrahierung des Vektors C0 verwendet wurde,

        g.5. man produziert (112) den Vektor B basierend auf dem Vektor $C_{wa}$.

mit Ni und Nj der ganzen positiven Zahlen, die für die Bewertung einer Ausstiegsbedingung aus der Schleife verwendet werden, und Dt, einer vorbestimmten Referenz.

**2.** Verfahren nach Anspruch 1, das **dadurch gekennzeichnet ist, dass** die verwendete Transformation eine Transformation aus der Liste ist, die zumindest folgende Elemente enthält :

    Wavelet-Transformation, Diskrete Kosinus Transformation, Fourier Transformation, Mellin-Fourier Transformation, oder durch eine algebraische Darstellung, beispielsweise durch eine Zerlegung in Einzelwerte.

**3.** Verfahren nach einem der Ansprüche 1 oder 2, das **dadurch gekennzeichnet ist, dass** die Reihung ansteigend, absteigend oder zufällig erfolgt.

**4.** Verfahren nach einem der Ansprüche 1 bis 3, das **dadurch gekennzeichnet ist, dass** die Chiffrierbehandlung durch ein Verfahren des Typs Kanalcodierung, oder mit einem Trellis Codierer erfolgt, wobei der Schlüssel K die Matrix dieses Codierers ist.

**5.** Verfahren nach einem der Ansprüche 1 bis 4, das **dadurch gekennzeichnet ist, dass** die Dechiffrierbehandlung durch ein Verfahren des Typs Kanaldecodierung erfolgt, mit einem Viterbi Decodierer unter Verwendung des Schlüssels K als Decodierungsmatrix.

6. Verfahren nach einem der Ansprüche 1 bis 5, das **dadurch gekennzeichnet ist, dass** R im Intervall [300, 420] enthalten ist.

7. Verfahren nach einem der Ansprüche 1 bis 6, das **dadurch gekennzeichnet ist, dass** L im Intervall [800, 1200] enthalten ist, für eine Videosequenz mit 25 Bildern pro Sekunde bei einer Übertragungsrate von 64kb/s.

8. Verfahren nach einem der Ansprüche 1 bis 7, das **dadurch gekennzeichnet ist, dass** der Robustheitskoeffizient D $D = \dfrac{G-B}{|G-B|} \circ Cw$ ist, wobei |.| die dimensionale euklidische Norm L*R, und ° der Rechenoperator des ungenormten Korrelationskoeffizienten ist.

9. Verfahren nach einem der Ansprüche 1 bis 8, das **dadurch gekennzeichnet ist, dass** die Störung der Videosequenz mit einem Rauschen des Typs weißes Rauschen erfolgt.

10. Verfahren nach einem der Ansprüche 1 bis 9, das **dadurch gekennzeichnet ist, dass** die Störung der Videosequenz durch eine StirMark Attacke erfolgt, die auf jedes Bild der Sequenz angewandt wird.

11. Verfahren nach einem der Ansprüche 1 bis 10, das **dadurch gekennzeichnet ist, dass** die Änderung von Cw gemäß folgender Formel erfolgt :

$$Cw \leftarrow Cw + \frac{G-B}{|G-B|} \cdot (D_T - D),$$ wobei (.)

das Produkt von einem Vektor und einem Skalarfeld ist.

12. Verfahren nach einem der Ansprüche 1 bis 11, das **dadurch gekennzeichnet ist, dass** Ni im Intervall [175, 225] enthalten ist.

13. Verfahren nach einem der Ansprüche 1 bis 12, das **dadurch gekennzeichnet ist, dass** Nj im Intervall [175, 225] enthalten ist.

14. Verfahren nach einem der Ansprüche 1 bis 13, das **dadurch gekennzeichnet ist, dass** S * Lm gleich L * R ist, wobei S die Anzahl an Spalten in der Matrix des Trellis Codierers darstellt.

15. Verwendung des Verfahrens nach einem der Ansprüche 1 bis 14 zur Markierung einer Videosequenz.

**Fig. 1**

**Fig. 2**

**Fig. 3**

**RÉFÉRENCES CITÉES DANS LA DESCRIPTION**

**Documents brevets cités dans la description**

- US 20030133590 A1